Europäisches Patentamt

European Patent Office

Office européen des brevets

(11) Veröffentlichungsnummer: **0 236 787 B1**

(19)

# (12) EUROPÄISCHE PATENTSCHRIFT

(45) Veröffentlichungstag der Patentschrift: **03.06.92**

(51) Int. Cl.5: **B60H 1/00**, F25B 13/00

(21) Anmeldenummer: **87102131.7**

(22) Anmeldetag: **14.02.87**

(54) **Heiz- und Kühlvorrichtung für Kraftfahrzeuge.**

(30) Priorität: **28.02.86 DE 3606591**

(43) Veröffentlichungstag der Anmeldung:
**16.09.87 Patentblatt 87/38**

(45) Bekanntmachung des Hinweises auf die
Patenterteilung:
**03.06.92 Patentblatt 92/23**

(84) Benannte Vertragsstaaten:
**DE FR GB IT**

(56) Entgegenhaltungen:
**EP-A- 0 095 704**
**DE-A- 3 047 955**
**GB-A- 1 548 561**

**PATENT ABSTRACTS OF JAPAN, Band 10,
Nr. 122 (M-476)[2179], 7. Mai 1986; & JP-A-60
252 023 (MITSUBISHI DENKI K.K.) 12-12-1985
(Kat. X)**

**PATENT ABSTRACTS OF JAPAN, Band 6, Nr.
4 (M-106)[882], 12. Januar 1982; & JP-A-56 128
215 (NIPPON DENSO K.K.) 07-10-1981**
(73) Patentinhaber: **Bayerische Motoren Werke Aktiengesellschaft
Patentabteilung AJ-30 Postfach 40 02 40 Petuelring 130
W-8000 München 40(DE)**

(72) Erfinder: **Bednarek, Henryk
Max-Frieseneggerstrasse 3
W-8910 Landsberg(DE)**

**Beschreibung**

Die Erfindung bezieht sich auf eine Heiz- und Kühlvorrichtung für Kraftfahrzeuge einer Bauart mit den Merkmalen gemäß dem Oberbegriff des Patentanspruchs 1.

Eine derartige Anordnung ist aus der JP-A-60 252 023 bekannt. Dort wird eine Heiz- und Kühlvorrichtung für Kraftfahrzeuge beschrieben, bei welcher automatisch mit Hilfe einer Steuervorrichtung in Abhängigkeit der Temperatur des Motors oder des Kühlmittels ein Kältemittel-Kreislauf zum Heizen verwendet wird. Bei Erreichen einer vorbestimmten Temperatur wird dieser zum Heizen verwendete Kältemittel-Kreislauf abgeschaltet und die Heizung wird mit Hilfe des Kühlmittel-Kreislaufes der Brennkraftmaschine fortgesetzt bzw. begonnen.

Nicht bekannt ist es hieraus, was während des Heizbetriebes mit Hilfe des Kältemittel-Kreislaufes mit dem Kühlmittel-Wärmetauscher passiert.

Aufgabe der vorliegenden Erfindung ist es deshalb sicherzustellen, daß beim Heizen mit Hilfe des Kältemittel-Kreislaufes schnell eine ausreichende Wärmemenge zur Verfügung steht.

Diese Aufgabe wird erfindungsgemäß durch die Merkmale des ersten Anspruchs gelöst. Das erfindungsgemäße Abschalten des Kühlmittel-Kreislaufes der Brennkraftmaschine zum Heizen der Fahrgastzelle wird solange aufrechterhalten, bis eine ausreichende Kühlmittel-Temperatur von der Brennkraftmaschine zur Verfügung gestellt wird und damit der Kühlmittel-Wärmetauscher die Heizung übernehmen kann. Dies hat den Vorteil, daß auch die Brennkraftmaschine ihre Betriebstemperatur schneller erreicht, da dem Motorkühlmittel keinerlei Wärme durch den Kühlmittel-Wärmetauscher entzogen wird. Ein weiterer Vorteil ist darin zu sehen, daß die gesamte Anlage ohne zusätzliche Bedienungselemente auskommt, so daß die Bedienung derart ausgerüsteter Kraftfahrzeuge nicht zusätzlich erschwert wird.

Die Merkmale der Patentansprüche 2 und 3 enthalten Weiterbildungen der Erfindung. Gemäß Anspruch 2 wird der Heizbetrieb mittels des Kältemittel-Kreislaufes nur bei Umgebungstemperaturen um und unter dem Gefrierpunkt eingesetzt, so daß der erforderliche zusätzliche Leistungsbedarf und Kraftstoffverbrauch auf diesen zum verkehrssicherheitsbedingten Scheibenentfrosten wichtigen Temperaturbereich begrenzt ist.

Durch die Merkmale nach Anspruch 3 wird die Zeitdauer bis zum Erreichen einer wirksamen Heizlufttemperatur verkürzt, indem die im Luft-/Kältemittel-Wärmetauscher erwärmte Heizluft ohne Wärmeverlust im Kühlmittel-Wärmetauscher unmittelbar zu den Heiz- und/oder Entfrost-Ausströmern geleitet wird.

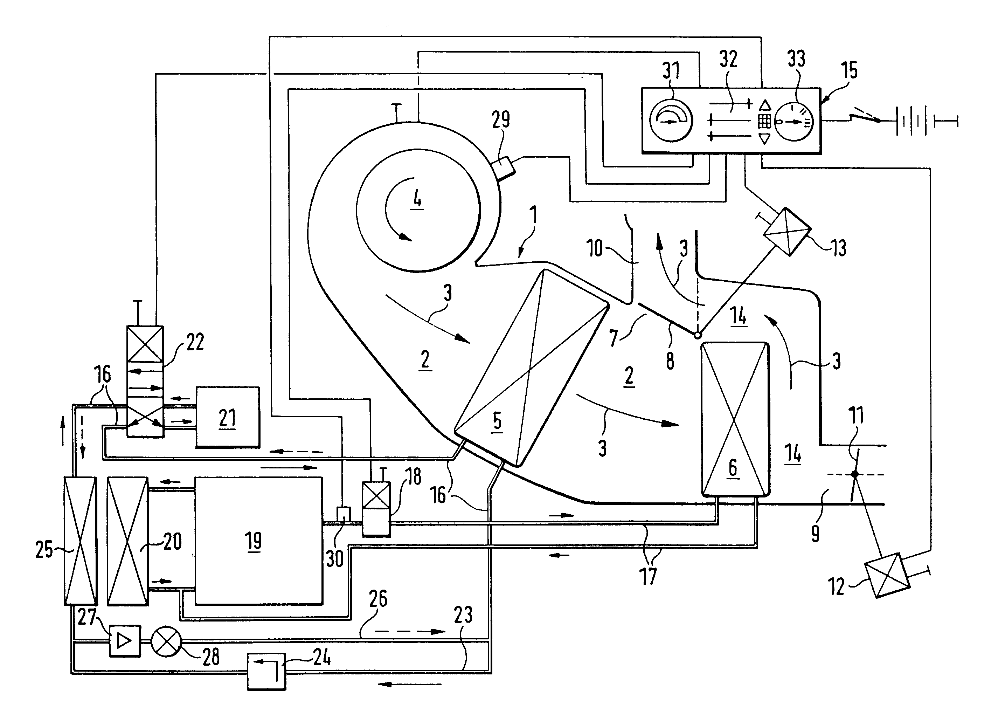

In der Zeichnung ist ein Ausführungsbeispiel der Erfindung dargestellt. Sie zeigt eine Heiz- und Kühlvorrichtung für Kraftfahrzeuge in schematischer Darstellung.

Ein Heiz- und Kühlgerät 1 enthält in einem Luftkanal 2 in Luftströmungsrichtung 3 hintereinander geschaltet ein Frischluft-/Umluft-Gebläse 4, einen Luft/Kältemittel-Wärmetauscher 5 und einen Luft/Kühlmittel-Wärmetauscher 6. Zwischen den beiden Wärmetauschern 5 und 6 ist eine Luft-Austrittsöffnung 7 angeordnet, die mittels einer Umschaltklappe 8 steuerbar ist. In Luftströmungsrichtung 3 nach dem Luft/Kühlmittel-Wärmetauscher 6 schließen Heizluft-Kanäle 9 zum Fußraum des Fahrzeuginnenraumes und 10 zu Entfrost-Ausströmern im Bereich der Windschutzscheibe des Fahrzeuges an.

Der Heizluftkanal 9 zum Fußraum enthält eine Steuerklappe 11, die mittels eines Stellmotors 12 einstellbar und verschließbar ist. Der Heizluftkanal 10 zu den Entfrost-Ausströmern ist mittels eines weiteren Stellmotors 13 mittels der Umschaltklappe 8 wahlweise an die Austrittsöffnung 7 oder den Warmluftkanal 14 bzw. an die Austrittsseite des Luft/Kühlmittel-Wärmetauschers 6 anschließbar. Auch Zwischenstellungen der Umschaltklappe 8 sind möglich. Die Einstellungen der Förderleistung des Gebläses 4 und der Umschalt- und Steuerklappen 8 bzw. 11 werden von der Steuervorrichtung 15 bestimmt, die mittels Dreh- und Schiebe-Reglern den Fahrzeug-Insassen die Einstellungen ermöglicht und mittels elektrisch-elektronischer Steuerelemente die Stellmotoren 12 und 13 betätigt.

Die Beaufschlagung der Wärmetauscher 5 und 6 mittels Kältemittel bzw. Kühlmittel erfolgt über die Kältemittel-Leitungen 16 bzw. Kühlmittel-Leitungen 17. Die Kühlmittel-Strömung wird durch ein an der Steuervorrichtung 15 einstellbares Kühlmittel-Heizungsventil 18 bestimmt, wodurch die Heizleistung des Luft/Kühlmittel-Wärmetauschers 6 je nach Ventil-Einstellung und Temperatur des Kühlmittels steuerbar ist. Das Heizungsventil 18 kann auch als übliches elektronisch gesteuertes Taktventil ausgebildet sein, dessen Öffnungs-Zeitintervalle den Kühlmittel-Volumenstrom bestimmen. Die Kühlmittel-Leitungen 17 sind an dem üblichen Kühlkreis des Fahrzeug-Antriebsmotors 19 mit Kühler 20 angeschlossen. Die Kältemittel-Strömung durch den Luft/Kältemittel-Wärmetauscher 5 und damit sowohl die Kühlleistung bei Kühlbetrieb als auch die Heizleistung bei Heizbetrieb des Kältemittelkreises wird durch den Betrieb des vom Motor 19 über eine übliche, nicht dargestellte Kupplung angetriebenen Kältemittel-Kompressors 21 bestimmt, der je nach Kühlleistungs-Bedarf und -Einstellung verschieden lange Einschaltzeiten aufweist.

Für das Umschalten von Kühl- auf Heizbetrieb ist in die Kältemittelleitung 16 ein Vierwege-Umschaltventil 22 eingebaut, das in Abhängigkeit von der Einstellung der Steuervorrichtung 1) auf Kühlen oder Heizen umschaltet. Die Strömungsrichtung in den Kältemittel-Leitungen 16 ist für den in der Zeichnung insgesamt dargestellten Heizbetrieb mit durchgezogenen Pfeilen und für den Kühlbetrieb mit unterbrochenen Pfeilen angegeben. Im Heizbetrieb strömt demnach das Kältemittel vom Ausgang des Kompressors 21 durch das Vierwege-Umschaltventil 22 zum Luft/Kältemittel-Wärmetauscher 5, der hierbei als Kondensator wirkt und die im Kompressor erzeugte Wärme an die Heizluft abführt. Der Rücklauf enthält in einer Parallel-Leitung 23 ein Druckhalteventil 24 und führt über einen weiteren als Heiz-Verdampfer wirkenden Luft/Kältemittel-Wärmetauscher 25 und durch das Vierwege-Umschaltventil 22 zurück zum Eingang des Kompressors 21.

Für den Kühlbetrieb wird das Vierwege-Ventil 22 mittels der Steurvorrichtung 15 umgeschaltet. Das Kältemittel strömt dadurch entsprechend den unterbrochenen Pfeilen durch die Kältemittel-Leitungen 16, den dabei als Kühl-Kondensator wirkenden weiteren Luft/Kältemittel-Wärmetauscher 25, die weitere Parallel-Leitung 26 mit darin enthaltenem Einwegventil 27 und Expansionsventil 28 und durch den als Kühl-Verdampfer wirkenden Luft/Kältemittel-Wärmetauscher 5 im Heiz-und Kühlgerät 1 zurück zum Einwegventil 22 und zum Eingang des Kompressors 21.

An die Steuervorrichtung 15 sind neben den üblichen mechanischen, pneumatischen, elektromagnetischen oder elektromotorischen Stellorgangen für Klappen, Ventile und Schalter sowie Temperatur-Sensoren für die Steuerung oder Regelung der Heiz- und Kühlvorrichtung je ein weiterer Temperatur-Sensor 29 für die Umgebungtemperatur am Lufteintritt des Gebläses 4 bzw. 30 für die Kühlmittel-Temperatur im Motor-Kühlkreis vorgesehen. Diese Sensoren 29 und 30 können auch Bestandteile der vorgenannten Steuerung und Regelung der Heiz-und Kühlvorrichtung sein und mehrfach genutzt werden. Die Temperaturwerte dieser Sensoren 29 und 30 bewirken in der Steuervorrichtung 15 ein selbsttätiges Ein- und Ausschalten des Heizbetriebes mittels des Kältemittel-Kreises in den dargestellten Einstellungen der Dreh- und Schieberegler an der Steuervorrichtung 15 auf die dargestellten Schaltstellungen der Umschalt- und Steuerklappen 8 bzw. 11 und auf Heizbetrieb sowie Gebläsebetrieb gemäß den üblichen Entfrost-Einstellungen derartiger Heiz- und Kühlvorrichtungen. Dabei ist die Steuervorrichtung 15 so abgestimmt, daß bei einer Umgebungstemperatur im Bereich unter und knapp über dem Gefrierpunkt (d.h. ca. +10°C und niedriger) der Heizbetrieb mittels des Kältemittelkreises durch Einschalten des Kältemittel-Kompressors 21 und Umschalten des Vierwege-Umschaltventiles 22 eingeschaltet wird. Nach Erreichen der Motor-Kühlmittel-Temperatur von wenigstens 60°C schaltet die Steuervorrichtung 15 selbsttätig auf alleinigen Heizbetrieb mittels des Kühlmittel-Kreislaufes um.

Für ein besonders wirksames Entfrosten der Windschutzscheibe ist zweckmäßig die Steuerklappe 11 für den Heizluftkanal 9 zum Fußraum geschlossen. Die Umschaltklappe 8 steht dabei in der strichliniert dargestellten, die Austrittsöffnung 7 vollständig öffnenden Stellung.

**Patentansprüche**

1. Heiz- und Kühlvorrichtung für Kraftfahrzeuge mit einem in Luftströmungsrichtung (3) angeordneten Luft /Kältemittel-Wärmetauscher (5) und einem diesem nachgeschalteten Luft /Kühlmittel-Wärmetauscher (6), bei der ein Kältmittel-Kreislauf wahlweise zum Kühlen und zum Heizen und ein Kühlmittel-Kreislauf einer Brennkraftmaschine (19) zum Heizen einschaltbar sind sowie mit einer Steuervorrichtung (15), die mit einem im Kühlmittel-Kreislauf vorgesehenem Kühlmittel-Ventil (18) verbunden ist, wobei zum Heizen der Kältemittel-Kreislauf selbsttätig eingeschaltet wird, wenn eine vorgegebene Kühlmittel-Temperatur unterschritten ist und der Kältemittel-Kreislauf selbsttätig wieder abgeschaltet wird, wenn eine zum Heizen ausreichende Kühlmittel-Temperatur vorliegt, dadurch gekennzeichnet, daß Bedienungselemente (31, 32, 33) zum wahlweisen Einstellen der Funktionen Kühlen, Heizen, Entfrosten und Lüften mit der Steuervorrichtung (15) gekoppelt sind und daß bei Heizen- und/oder Entfrosten-Stellung der Bedienelemente (31, 32, 33) die Steuervorrichtung (15) den Kühlmittel-Durchfluß durch den Luft /Kühlmittel-Wärmetauscher (6) selbsttätig unterbindet, solange der Kältemittel-Kreislauf zum Heizen benutzt wird.

2. Vorrichtung nach Anspruch 1, dadurch gekennzeichnet, daß die Steuervorrichtung (15) das Heizen mittels des Kältemittel-Kreislaufes nur bei einer Umgebungstemperatur von weniger als 10°C selbsttätig einschaltet.

3. Vorrichtung nach Anspruch 1 oder 2, dadurch gekennzeichnet, daß die Steuervorrichtung (15) eine Umschaltklappe (8) ansteuert, die in einem Luftkanal (10) angeordnet ist, der von dem Luft /KühlmittelWärmetauscher (6) zu Heiz- und/oder Entfroster-Ausströmern vorgesehen ist, wobei die Umschaltklappe beim Heizen mittels des Kältemittel-Kreislaufes den Luftkanal (10) zusätzlich und unmittelbar mit dem Luft /Kältemittel-Wärmetauscher (5) verbindet.

## Claims

1. A heating and cooling device for motor vehicles with an air/freezing-medium heat exchanger (5) arranged in the direction of air flow (3) and with an air/cooling-medium heat exchanger (6) connected after this heat exchanger (5), in which provision is made for connecting-in a freezing-medium circuit for cooling and for heating selectively and a cooling-medium circuit of an internal-combustion engine (19) for heating, and also with a control device (15) which is connected to a cooling-medium valve (18) provided in the cooling medium circuit, and in which the freezing-medium circuit is automatically connected-in for heating when the cooling medium temperature falls below a predetermined value and the freezing-medium circuit is automatically switched off again when there is a sufficient cooling medium temperature for heating, characterised in that operating elements (31, 32, 33) for the selective setting of the functions of cooling, heating, defrosting and ventilating are coupled with the control device (15), and that, in the heating and/or defrosting position of the operating elements (31, 32, 33) , the control device (15) automatically prevents the through-flow of cooling medium through the air/cooling-medium heat exchanger (6) as long as the freezing-medium circuit is being used for heating.

2. A device according to Claim 1, characterised in that the control device (15) automatically switches in the heating by means of the freezing-medium circuit only at an ambient temperature of less than 10°C.

3. A device according to Claim 1 or 2, characterised in that the control device (15) controls a switch-over flap (8) which is arranged in an air duct (10) leading from the air/cooling-medium heat exchanger (6) to heating and/or defrosting outflows, in which the switch-over flap, during heating by means of the freezing-medium circuit, connects the air duct (10) additionally and directly with the air/freezing-medium heat exchanger (5).

## Revendications

1. Dispositif de chauffage et de refroidissement pour véhicules automobiles ayant un échangeur thermique (5) air/fluide frigorigène et un échangeur thermique (6) air/agent de refroidissement installé en aval du premier, dispositif dans lequel on peut insérer un circuit de fluide frigorigène destiné facultativement au refroidissement et au chauffage et un circuit d'agent refroidisseur d'un moteur à combustion interne (19) destiné au chauffage, dispositif ayant également un appareillage de commande (15), qui est relié à une vanne (18) pour agent refroidisseur prévue dans le circuit de cet agent de refroidissement, le circuit de fluide frigorigène se trouvant inséré automatiquement pour le chauffage, lorsqu'une température d'agent refroidisseur donnée n'est pas atteinte et le circuit de fluide frigorigène est à nouveau déconnecté automatiquement, si une température d'agent refroidisseur suffisante pour le chauffage est obtenue, dispositif caractérisé

   - en ce que des éléments de commande (31, 32, 33)sont associés au dispositif de commande (15) pour régler au choix les fonctions de chauffage, refroidissement, dégivrage et aération et
   - en ce que pour la position de chauffage et/ou de dégivrage des éléments de commande (31, 32, 33), le dispositif de commande (15) arrête automatiquement le passage de l'agent refroidisseur, à travers l'échangeur thermique (6) air/agent de refroidissement, tant que le circuit de fluide frigorigène est utilisé pour le chauffage.

2. Dispositif selon la revendication 1, caractérisé en ce que le dispositif de commande (15) enclenche automatiquement le chauffage au moyen du circuit de fluide frigorigène seulement à une température ambiante inférieure à 10°C.

3. Dispositif selon la revendication 1 ou 2, caractérisé en ce que le dispositif de commande (15) commande le volet de direction (8), disposé dans un canal d'air (10), qui est prévu depuis l'échangeur thermique (6) air/agent refroidisseur vers les distributeurs de flux pour le chauffage et/ou le dégivrage, le volet de direction reliant, pour le chauffage par le circuit de fluide frigorigène, le canal d'air (10) en plus et directement avec l'échangeur thermique (5) air/fluide frigorigène.

EP 0 236 787 B1